# EUROPEAN PATENT APPLICATION

(11) **EP 4 180 348 A1**
(43) Date of publication of application: **17.05.2023**
(21) Application number: 21207460.3
(22) Date of filing: 10.11.2021
(51) Int. Cl.: B65D 6/18, B62B 3/02, B65D 88/52, B65D 90/20, B65D 90/18, B65D 90/46

(54) **APPARATUS FOR TRANSPORTING PARTICLES AND METHOD THEREWITH**

(71) Applicant: JSP International SARL, 60190 Estrées-Saint-Denis (FR)
(72) Inventor: LE PEUTREC, Marc, 60190 Estrées-Saint-Denis (FR); BARATTE, Michel, 60190 Estrées-Saint-Denis (FR)
(74) Representative: Hafner & Kohl PartmbB

(57) **Abstract**

An apparatus for transporting particles, such as polymer particles, particularly foamed polymer particles, the apparatus comprising a frame structure comprising a plurality of, particularly bar- or strut-shaped, frame structure elements defining an inner space, wherein the frame structure comprises at least one transferrable frame structure element which is transferrable from a first orientation and/or position to at least one second orientation and/or position so as to change the size of the inner space.

## Description

The invention relates to an apparatus for transporting particles, such as polymer particles, particularly foamed polymer particles, the apparatus comprising a frame structure comprising a plurality of, particularly bar- or strut-shaped, frame structure elements defining an inner space.

The transport of particles between two locations, e.g. from a first location, which is or can be a first processing location, such as a harvesting location at which respective particles are harvested or a producing location of respective particles at which respective particles are produced, to a second location, which is or can be a further processing location of respective particles, is required in all kinds of technological fields. For the exemplary case of polymer particles, it can be required to transport polymer particles from a producing location at which respective particles are produced by chemical and/or physical processes to a further processing location at which respective particles are further processed by chemical and/or physical processes, e.g. to produce a part.

As such, apparatuses for transporting particles are generally known. Such known apparatuses may comprise a frame structure comprising a plurality of, particularly bar- or strut-shaped, frame structure elements defining an inner space.

One drawback of respective known apparatuses is that the frame structure has fixed dimensions such that also the inner space defined by respective frame structure elements has a fixed volume.

This means that respective apparatuses require a relatively large footprint when they are transported in an unloaded state, i.e. in a state in which they are not loaded with particles which renders the transport of respective apparatuses in an unloaded state highly ineffective e.g. for technical, economic and sustainable reasons.

Hence, there is a desire for respective apparatuses which are provided with more flexibility with respect to their dimensions and the related inner space.

It is therefore, an object of the present invention to provide an apparatus for transporting particles, such as polymer particles, particularly foamed polymer particles, which overcomes the aforementioned drawbacks.

The object is achieved by the subject-matter of the independent Claims. The subject-matter of the dependent Claims relates to possible exemplary embodiments of the subject-matter of the independent Claims.

A first aspect of the invention relates to an apparatus for transporting particles, such as polymer particles, particularly foamed polymer particles. The apparatus is thus, generally configured to transport particles.

The term "particle" generally refers to any kind of organic and/or inorganic bulk- or particulate material. The term "particle" thus, generally encompasses any kind of organic and/or inorganic bulk- or particulate material. Examples of an organic bulk- or particulate material refer to natural organic bulk- or particulate materials such as seeds, grains, etc. and/or synthetic organic bulk- or particulate materials such as polymers, particularly polyolefin-based polymers, polystyrene-based polymers, and/or polyester-based polymers. Particularly, cellular or foamed polymer particles, particularly cellular or foamed polyolefin-based polymer particles, polystyrene-based polymer particles, and/or polyester-based polymer particles, - both sometimes also denoted as cellular or foamed polymer beads - are concerned. Examples of an inorganic bulk- or particulate material refer to ceramics or metals. Particularly, cellular or foamed metal particles are concerned.

The apparatus comprises a frame structure. As will be apparent from the further explanation of the apparatus, the frame structure can also be denoted a mobile silo. The frame structure comprises a plurality of frame structure elements defining an inner space. The frame structure elements can have a longitudinal shape. Particularly, the frame structure elements can have a bar- or strut-shape. The length of the frame structure elements can range between 0,5 m and 30 m, particularly between 0,5 m and 25 m, more particularly between 0,5 m and 20 m, more particularly between 0,5 m and 15 m, more particularly between 0,5 m and 10 m, more particularly between 0,5 m and 9 m, more particularly between 0,5 m and 8 m, more particularly between 0,5 m and 7 m, more particularly between 0,5 m and 6 m, more particularly between 0,5 m and 5 m, more particularly between 0,5 m and 4 m, more particularly between 0,5 m and 3,5 m, more particularly between 0,5 m and 3 m, more particularly between 0,5 m and 2 m, more particularly between 0,5 m and 1 m, for instance. Irrespective of their shape, the frame structure elements can be made of a metal or metal alloy, such as steel, particularly weldable steel. Each of the above values, as any other value mentioned in this document, can also be considered an upper or lower threshold. As such, the frame structure can at least partly comprise a welded construction of respective frame structure elements. However, the term "metal" can also include light metals, such as Aluminum, Magnesium, etc. Also, at least some of the frame structure elements could at least partly be made of wood.

In either case, the material, the concrete shape, and the spatial arrangement of the frame structure elements can define the structural properties, particularly the cargo loading properties, of the frame structure. This means that the material, the shape, and the spatial arrangement of the frame structure elements can be deliberately chosen to provide the frame structure with specific structural properties, particularly cargo loading properties.

At least two frame structure elements can be arranged in an angled arrangement relative to each other. Thus, at least two respective frame structure elements can be arranged with an angle relative to each other. A respective angle can be in the range from about 45° to about 135° relative to a horizontal or a vertical reference axis, for instance. Specifically, a respective angle can be about 90° relative to a horizontal or a vertical reference axis, for instance. Additionally or alternatively, at least two respective frame structure elements can be arranged in parallel relative to each other.

As such, the frame structure generally comprises an angled arrangement of at least two frame structure elements, wherein at least two frame structure elements extend in different spatial axes. Particularly, the frame structure may comprise one or more first frame structure elements extending in a first spatial axis, one or more second frame structure elements extending in a second spatial axis, and one more third frame structure elements extending in a third spatial axis which may result in a box- or cuboid-shape of the frame structure at least in its operational configuration which will be explained further below. A respective first spatial axis can define a height direction of the frame structure, a respective second spatial axis can define a length direction of the frame structure, and a respective third spatial axis can define a depth/width direction of the frame structure.

In either case, the frame structure is can be open which means that the frame structure elements nor their arrangement necessarily defines closed walls. Specifically, the frame structure elements do not necessarily define closed side walls and a closed top wall of the frame structure. As such, the frame structure elements can define the outer contour and/or edges of the frame structure. A respective open design of the frame structure typically, results in a weight reduction of the frame structure and is thus, of advantage, e.g. compared with conventional containers having a generally closed design.

Yet, it is conceivable that at least one side wall is provided with, e.g. detachable, cover elements which at least partly close the respective side-wall. Respective cover elements may be provided in the shape of panels, for instance.

Notably, a bottom portion of the frame structure is typically, provided as or with a closed wall such that the frame structure can comprise an (essentially) closed bottom wall. A respective closed bottom wall can enable at least one person to enter the inner space of the frame structure and stand within the inner space of the frame structure which can be useful, e.g. for installation-, service- or repair-works. As will be more apparent from the further explanation of exemplary embodiments of the apparatus, the expression "closed bottom wall" does not exclude that the bottom wall of the frame structure comprises at least one connection interface, e.g. comprising an opening, allowing for introducing particles in the frame structure or for removing particles from the frame structure.

The frame structure comprises at least one transferrable frame structure element which is transferrable from a first orientation and/or position to at least one second orientation and/or position so as to change the size or volume of the inner space. Typically, the frame structure comprises at least two transferrable frame structure elements provided at opposing sides of the frame structure, wherein each of the at least two transferrable frame structure elements is transferrable from a first orientation and/or position to at least one second orientation and/or position so as to change the size of the inner space.

Notably, transferal of a first transferrable frame structure element from a respective first orientation and/or position to at least one second orientation and/or position can be independent or dependent from transferal of at least one further frame structure element from a respective first orientation and/or position to at least one second orientation and/or position, or vice versa.

Hence, the size or volume of the inner space of the frame structure can be modified, i.e. increased or decreased, by transferring the at least one transferrable frame structure element from its first orientation and/or position to its at least one second orientation and/or position. Particularly, by transferring the at least one transferrable frame structure element from its first orientation and/or position to its at least one second orientation and/or position, the size or volume of the inner space of the frame structure can typically be modified, i.e. increased or decreased, in at least one spatial direction. As an example, the size of the inner space can be modified in at least one of a vertical axis/direction of the frame structure and a horizontal axis/direction of the frame structure. Given that the frame structure has a height direction, a length direction, and depth/width direction, the increase or decrease of the inner space can particularly, take place in at least one of the height direction, length direction, and depth/width direction. In same manner, also the outer dimensions of the frame structure can be modified, i.e. increased or decreased, accordingly.

Transferring the at least one transferrable frame structure element from a first orientation and/or position to at least one second orientation and/or position typically, results in an increase of the size of the inner space. Particularly, by transferring the at least one transferrable frame structure element from its first orientation and/or position to its at least one second orientation and/or position, the size of the inner space can be increased at least by 10%, particularly at least by 20%, more particularly at least by 30%, more particularly at least by 40%, more particularly at least by 50%, more particularly at least by 60%, more particularly at least by 70%, more particularly at least by 80%, more particularly at least by 90%, more particularly at least by 100%, more particularly at least by 110%%, more particularly at least by 120%%, more particularly at least by 130%%, more particularly at least by 140%, more particularly at least by 150%, more particularly at least by 160%%, more particularly at least by 170%%, more particularly at least by 180%%, more particularly at least by 190%, %, more particularly at least by 200%, when the at least one transferrable frame structure element is or has been transferred in its second orientation and/or position.

As such, it is generally possible to deliberately modify the spatial footprint of the frame structure, i.e. particularly the size of the base area of the frame structure, by transferring the at least one frame structure element from a first orientation and/or position to at least one second orientation and/or position so as to adapt the configuration of the frame structure to different purposes which can mainly depend on the loading state of the inner space of the frame structure. As will be apparent from below, transferring of the at least one frame structure element from a first orientation and/or position to at least one second orientation and/or position can particularly be effected manually, i.e. particularly without tools, which highly increases the practicability of the apparatus.

In an operational configuration of the frame structure, in which it is configured to receive particles to be transported from a first location to at least one further location, the configuration of the frame structure will typically have an increased inner space which typically, results from transferring the at least one frame structure element from its first orientation and/or position to its at least one second orientation and/or position. The or a respective operational configuration can also be deemed a loading configuration since it particularly allows that the frame structure can be loaded with particles. The or a respective operational configuration is typically, related with a state in which the frame structure is fillable or filled with particles (filled state).

In a non-operational configuration of the frame structure, in which it is not configured to receive particles to be transported from a first location to at least one further location, the configuration of the frame structure will typically have a decreased inner space which typically, results from transferring the at least one frame structure element from its at least one second orientation and/or position to its at least one first orientation and/or position. The or a respective non-operational configuration can also be deemed a non-loading configuration since it particularly does not allow that the frame structure can be loaded with particles. The or a respective non-operational configuration is typically, related with a state in which the frame structure is not fillable or filled with particles (unfilled state).

It is also conceivable that the frame structure comprises at least two different operational configurations which differ in the size of the respective inner space. Hence, a first operational configuration of the frame structure can be achieved by transferring the at least one frame structure element from its first orientation and/or position to a first second orientation and/or position and at least one further operational configuration of the frame structure can be achieved by transferring the at least one frame structure element from its first orientation and/or position to at least one further second orientation and/or position different from the first second orientation and/or position.

It is clear from the above explanation of the possibility of modifying the size of the inner space of the frame structure that the apparatus overcomes the drawbacks of conventional apparatuses. This particularly, applies because the apparatus does not have a fixed footprint and does not require a relatively large footprint when transported in an unloaded state, i.e. in a state in which it is not loaded with particles. This renders the transport of the apparatus in an unloaded state highly effective. Particularly, handling of transport of the apparatus in an unloaded state with a decreased footprint is more effective not only in terms of technical aspects, but also economic aspects and sustainable aspects.

Typically, the frame structure also comprises at least one non-transferrable frame structure element, i.e. a frame structure element which is not transferrable from a first orientation and/or position to at least one second orientation and/or position so as to change the size of the inner space. Hence, the frame structure can comprise at least one respective transferrable frame structure element and at least one non-transferrable frame structure element.

Respective transferrable frame structure elements are typically, moveably supported in at least one degree of freedom of motion. A respective degree of freedom of motion can be a rotary degree of freedom of motion about a rotary axis. A respective rotary axis can be defined by a longitudinal axis of the respective frame structure element or at least one further frame structure element or a parallel axis thereto. Alternatively or additionally, a respective degree of freedom of motion can be a translatory degree of freedom of motion along a translatory axis. A respective translatory axis can be defined by a longitudinal axis of the respective frame structure element or at least one further frame structure element or a parallel axis thereto. As such, the at least one transferrable frame structure element can be transferrable from a first orientation and/or position to at least one second orientation by a translatory motion relative to at least one further frame structure element.

Particularly, the at least one transferrable from structure element can be connected with at least one further transferrable frame structure element or at least one non-transferrable frame structure element via at least one hinge-joint. Hence, the at least one transferrable from structure element can be particularly transferred from its first orientation and/or position to its at least one second orientation and/or position by a pivot motion enabled by the at least one hinge-joint. The axis of the respective degree of freedom of motion of the at least one transferrable from structure element can thus, be a pivot axis defined by the at least one hinge-joint.

As indicated above, the frame structure can comprise a plurality of transferrable frame structure elements being transferrable from a first orientation and/or position to at least one second orientation and/or position. Particularly, the frame structure can comprise at least one first transferrable frame structure element being arranged at a first side of the frame structure and at least one second transferrable frame structure element being arranged at a second side of the frame structure, the second side being opposite the first side.

According to a preferred embodiment, the frame structure can comprise at least two respective transferrable frame structure elements being connected via at least one respective hinge-joint.

Specifically, the frame structure can at least comprise a first and a second transferrable frame structure element and a first and a second non-transferrable frame structure element, wherein the first transferrable frame structure element comprises a first connecting interface for being connected with the first non-transferrable frame structure element and a second connecting interface for being connected with a first connecting interface of the second transferrable frame structure element. Likewise, the second transferrable frame structure element comprises a first connecting interface for being connected with the second non-transferrable frame structure element and a second connecting interface for being connected with the second connecting interface of the first transferrable frame structure element. This arrangement of respective first and second transferrable frame structure elements and respective first and second non-transferrable frame structure elements is typically provided at two opposing sides of the frame structure.

The apparatus can comprise a plurality of motion elements, e.g. rollers, wheels, etc., for moving the frame structure on a ground. By providing the apparatus with respective motion elements, the frame structure can be moveable on a ground both in the loaded state and in the unloaded state. The apparatus can thus, be denoted a mobile silo. Motion of the frame structure can be effected manually, by at least one external driving device, such as a fork lift, robotic cart, etc. Also, the frame structure can be provided with an integrated driving means, such as a motor, for instance.

Respective motion elements are typically, provided with frame structure elements defining a bottom of the frame structure. As an example, the apparatus is provided with at least four motion elements arranged at or in the region of the outer edges of the frame structure such that the arrangement of the motion elements also provides a certain degree of stabilization of the frame structure against tilting relative to a horizontal or vertical axis.

The apparatus can further comprise at least one stabilization element for stabilizing the frame structure against tilting, particularly against tilting over a defined tilting angle, such as a tilting angle ranging between 5 and 45°, particularly ranging between 5 and 40°, more particularly ranging between 5 and 35°, more particularly ranging between 5 and 30°, more particularly ranging between 5 and 25°, more particularly ranging between 5 and 30°, more particularly ranging between 5 and 20°, more particularly ranging between 5 and 15°, more particularly ranging between 5 and 10°, for instance, relative to a horizontal or vertical axis. The at least one stabilization element is typically, also provided with at least one frame structure element. Particularly, the at least one stabilization element can be provided with a frame structure element defining a bottom of the frame structure. More, particularly, the at least one stabilization element can be provided adjacent to a respective motion element provided with at least one frame structure element. As such, the apparatus can comprise a plurality of stabilization elements, wherein each stabilization element is particularly provided adjacent, i.e. in particularly in close proximity, to a respective motion element. Typically, respective stabilization elements will have an outer position with respect to a free end of the frame structure than respective motion elements.

Generally, the arrangement of respective stabilization elements can comprise a base position above ground, i.e. a position in which the respective stabilization elements do not touch ground. Yet, the stabilization elements will contact ground thereby, enabling a stabilizing effect, when the frame structure begins to tilt relative to a horizontal or vertical axis, particularly when the frame structure tilts and reaches a defined tilting angle relative to a horizontal or vertical axis such that further tilting of the frame structure beyond the defined tilting angle is inhibited. Also, the arrangement of respective stabilization elements can comprise a position on ground, i.e. a position in which the respective stabilization elements do touch ground for providing the respective stabilization of the frame structure against tilting.

The at least one stabilization element can comprise a roller or wheel, for instance. However, the size, i.e. particularly the diameter, of the rollers or wheels forming a respective stabilization element can be smaller than the size, i.e. particularly the diameter, of the other motion elements which enable motion of the frame structure relative to ground. In such a manner, the rollers or wheels forming a respective stabilization element can be positioned in a respective base position as mentioned above.

The apparatus can comprise at least one receiving element provided with the inner space and forming a receiving space for receiving particles. Hence, the at least one receiving element can be deemed as the actual element for directly receiving particles to be transported with the apparatus. The at least one receiving element can be provided with at least one attachment interface which enables a stable attachment of the at least one receiving element with at least one frame structure element. Likewise, at least one frame structure element can be provided with at least one counter-attachment interface which enables a stable attachment of the at least one receiving element with at least one frame structure element. Respective attachment and counter-attachment interfaces can particularly, enable a mechanical attachment of the at least one receiving element with at least one frame structure element. Merely as an example, mechanical form-fit attachment elements, mechanical force-fit attachment elements, combined mechanical form- and force-fit elements, hook-and-loop-type attachment elements, etc. can be used for implementing respective interfaces. As such, a respective attachment of the at least one receiving element can be detachable such that a respective receiving element can be easily replaced, e.g. in case of failure, contamination, etc.

The at least one receiving element is typically, flexible with respect to its dimensions and related receiving space. As such, the at least one receiving element can be reversibly deformed, e.g. by folding, when the size of the inner space of the frame structure is increased or decreased by transferring at least one transferrable frame structure element from its first orientation and/or position to at least one second orientation and/or position as described above. As such, the at least one receiving element can be provided with at least one deforming structure, e.g. folding lines, facilitating deforming the at least one receiving element when the at least one transferrable frame structure element is transferred between its respective first and second orientations and/or positions.

The at least one receiving element can be made of a flexible mesh- or textile-structure or can comprise such a structure. The mesh- or textile-structure is typically, chosen such that undesired chemical and/or physical interactions with particles to be received in the receiving space are avoided. The mesh- or textile-structure can be used several times and can be thus, be re-used. Also, the mesh- or textile-structure can be cleaned such that it can be used with different materials without the danger of material contamination.

Respective undesired physical interactions can comprise electrical interactions between the mesh- or textile-structure and particles to be received in the receiving space which might result in an electrostatic charging of the mesh- or textile-structure and/or the particles to be received in the receiving space. As such, the at least one receiving element can be provided with one or more discharging elements enabling an electrostatic discharge. Respective discharging elements can be provided by electrically conductive structures, such as metal structures, provided with the at least one receiving element. Respective electrically conductive structures can be built by electrically conductive filaments which are integrated in the mesh- or textile-structure forming the at least one receiving element, for instance. Respective electrically conductive structures can be electrically connected with the frame structure e.g. so as to provide an electrical discharge to ground. The frame structure can be grounded with electrically conductive frame structure elements which are connected to ground and/or with separate grounding devices, which may be built as or comprise so-called crocodile clamps, for instance and which enable a connection of electrically conductive frame structure elements to ground.

The apparatus can comprise a locking device for locking the at least one transferrable frame structure element in the first and/or second orientation and/or position. A respective locking device can lock a specific configuration of the frame structure which increases both handling and safety of the apparatus. A respective locking device can comprise at least one locking element which is moveable between a locking position in which it locks the at least one transferrable frame structure element against motion, thus prohibiting a respective transferal of the frame structure element, and an unlocking position in which it does not lock the at least one transferrable frame structure element against motion thus, enabling a respective transferal of the frame structure element. A respective locking element, e.g. in the shape of a lever, for locking the at least one transferrable frame structure element in the first or second orientation and/or position can particularly be moveably supported, particularly pivotably supported, at a transferrable frame structure element or at a non-transferrable frame structure element and can engage in its locking position with an engagement portion, e.g. a projection, recess, etc., of at least one other transferrable frame structure element or non-transferrable frame structure element so as to lock the at least one transferrable frame structure element against motion. Also, an inverse configuration is conceivable.

The apparatus can comprise at least one connection interface provided with at least one side, particularly a bottom wall, of the frame structure, the at least one connection interface allowing for introducing particles in the frame structure or for removing particles from the frame structure, e.g. via a hose, pipe, tube, etc. Particularly, the at least one connection interface can comprise a base portion and a flange portion configured to being connected with a hose, pipe, tube, etc. The at least one connection interface can be provided by or in an opening in a bottom wall of the frame structure. As such, the at least one connection interface provides an entrance and/or an exit for particles to be introduced into the frame structure, i.e. particularly into a respective unfilled or unloaded receiving element provided within the frame structure, or for particles to be removed from the frame structure, i.e. particularly from a respective filled or loaded receiving element provided with the frame structure. As such, the at least one connection interface typically, communicates with an entrance or exit opening provided with a respective receiving element.

To enable a stable connection between the at least one connection interface and the at least one receiving element, which can comprise a special tube-like portion at least partially extending into the at least one connection interface, the apparatus can comprise at least one adapter element which provides a stable connection between the at least one connection interface and the at least one receiving element. A respective adapter element can particularly, be configured to provide a holding force, e.g. a clamping force, between the at least one connection interface and the at least one receiving element. The holding or clamping force thus, particularly serves for holding or clamping, respectively the at least one receiving element, i.e. particularly a respective tube-like portion, against a wall portion the delimiting the inner space of the at least one connection interface. This can be achieved by inserting a respective adapter element into the connection interface after placing a respective tube-like portion of the at least one receiving element into the connection interface. A respective adapter element can further be mechanically connected to the frame structure, e.g. by a screw connection.

A respective adapter element can comprise a conical base-shape, for instance. The conical base-shape enables improved clamping of the receiving element, i.e. particularly a respective tube-like portion, against a wall portion of the bottom wall of the frame structure delimiting an inner space of the connection interface.

Both the at least one connection interface or the at least one adapter element can be provided with at least one valve device for avoiding undesired particle leakage from the frame structure or the at least one receiving element, respectively. The at least one valve device can comprise at least one valve element which is moveable between a closed position in which it closes the at least one connection interface or the at least one adapter element, respectively, thus prohibiting particle leakage, and an open position in which it does not close the at least one connection interface or the at least one adapter element thus, enabling particle leakage.

In either embodiment, the inner space of the frame structure can have in its operational configuration a volume ranging between 1 m³ to 100 m³, particularly between 1 m³ to 90 m³, more particularly between 1 m³ to 80 m³, more particularly between 1 m³ to 70 m³, more particularly between 1 m³ to 60 m³, more particularly between 1 m³ to 50 m³, more particularly between 1 m³ to 40 m³, more particularly between 1 m³ to 30 m³, more particularly between 1 m³ to 20 m³, particularly between 1 m³ to 10 m³. According to an exemplary embodiment, the inner space inner space of the frame structure has a volume of ca. 15 m³, 16 m³, 17 m³, 18 m³, 19 m³, 20 m³, 21 m³, 22 m³, 23, m³, 24 m³, or 25 m³. The aforementioned volumes are advantageous because they allow that the frame structure can be situated in conventional trucks, lorries, trains, air planes, ships or conventional hangers or wagons, respectively of respective trucks or lorries or trains, respectively.

In either embodiment, the frame structure can be configured to transport particles of a weight ranging between 0,1 tons to 10 tons, particularly between 0,1 tons to 9 tons, more particularly between 0,1 tons to 8 tons, more particularly between 0,1 tons to 7 tons, more particularly between 0,1 tons to 6 tons, more particularly between 0,1 tons to 5 tons, more particularly between 0,1 tons to 4 tons, more particularly between 0,1 tons to 4 tons, more particularly between 0,1 tons to 3 tons, more particularly between 0,1 tons to 2 tons, more particularly between 0,1 tons to 1 tons. According to a concrete example, the frame structure can be configured to transport particles of a weight ranging between 1,5 tons and 2,5 tons, particularly a weight of (about) 1,8 tons. The frame structure can thus, be configured to support the aforementioned weight loads. The aforementioned weight loads thus, also define the exemplary cargo loading properties of the frame structure.

According to a concrete example, the frame structure can have in its operational configuration a volume of (about) 18 m³ and can be configured to transport particles of a weight ranging at (about) 1,8 tons.

A second aspect of the invention relates to a method for transporting particles, particularly polymer particles, more particularly foamed polymer particles, using an apparatus according to the first aspect of the invention. The method particularly, comprises transferring at least one transferrable frame structure element from a respective first orientation and/or position to a respective second orientation and/or position; and/or introducing or removing particles from the inner space of the frame structure.

All annotations regarding the apparatus according to the first aspect of the invention also applies to the method of the second aspect of the invention and vice versa.

The above and further aspects of the invention will be explained in context with the appended Fig. in which:
Fig. 1 - 5 each show a principle drawing of an apparatus according to an exemplary embodiment;
Fig. 6 shows a principle drawing of a connection interface according to an exemplary embodiment; and
Fig. 7 shows a principle drawing of an adapter element according to an exemplary embodiment.

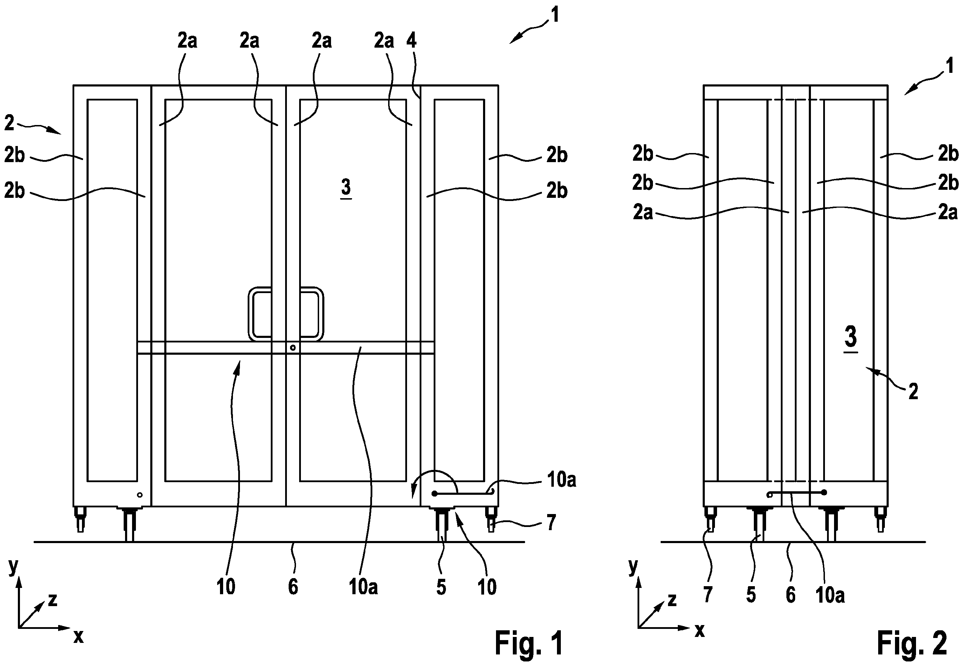

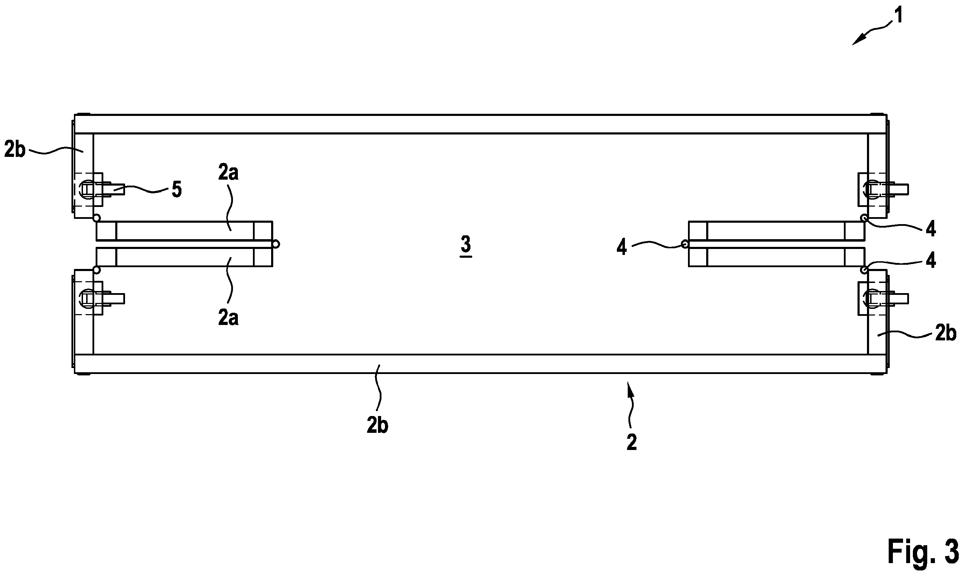

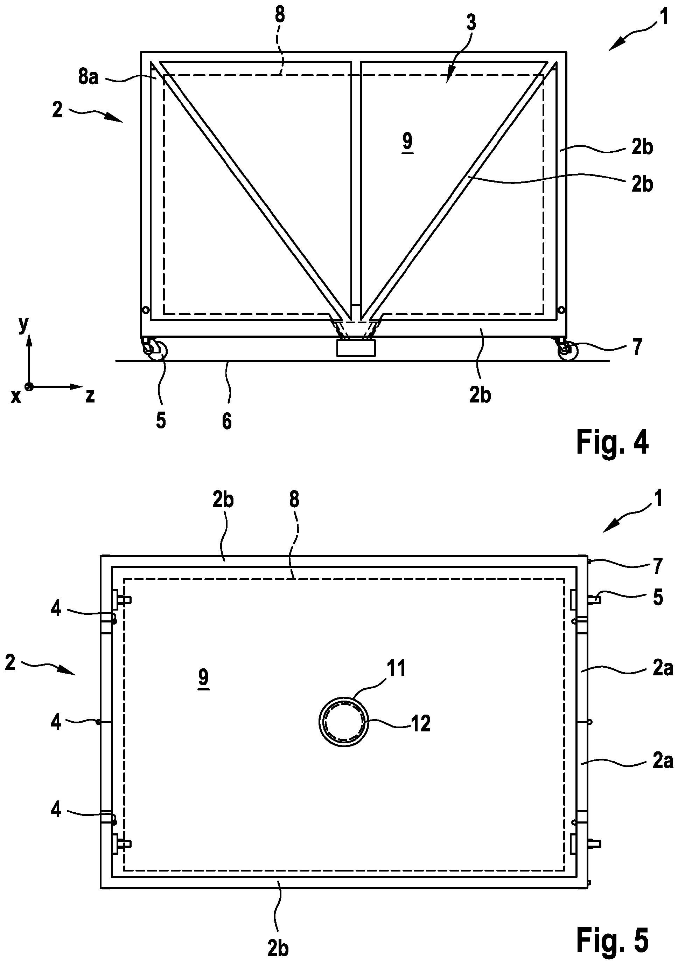

Fig. 1 - 4 each show a principle drawing of an apparatus 1 for transporting particles, such as polymer particles, particularly foamed polymer particles according to an exemplary embodiment. Thereby, Fig. 1 and Fig. 2 are both a frontal view of the apparatus 1, Fig. 3 and Fig. 5 are both a top-view of the apparatus 1 of Fig. 2 and Fig. 1, and Fig. 4 is a side view of the apparatus 1.

The apparatus 1 comprises a frame structure 2 which can generally be denoted as a mobile silo. The frame structure 2 comprises a plurality of frame structure elements 2a, 2b defining an inner space 3. The frame structure elements 2a, 2b can have a longitudinal shape. Particularly, the frame structure elements 2a, 2b can have a bar- or strut-shape. The length of the frame structure elements 2a, 2b can range between 0,5 m and 10 m, for instance. Irrespective of their shape, the frame structure elements 2a, 2b can be made of a metal or metal alloy, such as steel, particularly weldable steel. As such, the frame structure 2 can at least partly comprise a welded construction of respective frame structure elements 2a, 2b. Likewise, the frame structure elements 2a, 2b can be made of a light metal, such as Aluminum or Magnesium, for instance. Also, the frame structure elements 2a, 2b could at least partly be made of wood.

In either case, the material, the concrete shape, and the spatial arrangement of the frame structure elements 2a, 2b can define the structural properties, particularly the cargo loading properties, of the frame structure 2. This means that the material, the shape, and the spatial arrangement of the frame structure elements 2a, 2b can be deliberately chosen to provide the frame structure 2 with specific structural properties, particularly cargo loading properties.

As is apparent from Fig. 1 - 4 at least two frame structure elements 2a, 2b can be arranged in an angled arrangement relative to each other. Thus, at least two respective frame structure elements 2a, 2b can be arranged with an angle relative to each other. A respective angle can be in the range from about 45° to about 135° relative to a horizontal or a vertical reference axis, for instance. Specifically, a respective angle between certain frame structure elements 2a, 2b can be about 90° relative to a horizontal reference axis (see x-axis in Fig. 1) or a vertical reference axis (see y-axis in Fig. 1), for instance. As is also apparent from Fig. 1 - 4, at least two respective frame structure elements 2a, 2b can be arranged in parallel relative to each other.

As such, the frame structure 2 generally comprises an angled arrangement of a plurality of frame structure elements 2a, 2b, wherein the frame structure elements 2a, 2b extend in different spatial axes. Particularly, the frame structure 2 of Fig. 1 - 4 comprises one or more first frame structure elements 2a, 2b extending in a first spatial axis (e.g. the x-axis of Fig. 1), one or more second frame structure elements 2a, 2b extending in a second spatial axis (e.g. the y-axis of Fig. 1), and one more third frame structure elements 2a, 2b extending in a third spatial axis (e.g. the z-axis of Fig. 1) which may result in a box- or cuboid-shape of the frame structure 2 at least in its operational configuration which is shown in Fig. 1. A respective first spatial axis can define a length direction of the frame structure 2, a respective second spatial axis can define a height direction of the frame structure 2, and a respective third spatial axis can define a depth/width direction of the frame structure 2.

As is particularly apparent from Fig. 4, the frame structure 2 can generally be open which means that the frame structure elements 2a, 2b nor their arrangement defines closed walls. Specifically, the frame structure elements 2a, 2b do not define closed side walls and a closed top wall. Still, the frame structure elements 2a, 2b typically, define the outer contour and/or edges of the frame structure 2. The frame structure 2 thus, generally has an open design which results in a weight reduction of the frame structure 2 and is thus, of advantage, e.g. compared with conventional containers having a generally closed design.

Notably, a bottom portion of the frame structure 2 can be provided as or with a closed wall such that the frame structure 2 can comprise an (essentially) closed bottom wall 4. A respective closed bottom wall 3 can enable at least one person to enter the inner space 3 of the frame structure 2 and stand within the inner space 3 of the frame structure 2 which can be useful, e.g. for installation-, service- or repair-works. As will be more apparent from the further explanation of exemplary embodiments of the apparatus 1, the expression "closed bottom wall" does not exclude that the bottom wall of the frame structure 2 comprises at least one connection interface 11 allowing for introducing particles in the frame structure 2 or for removing particles from the frame structure 2.

The frame structure 2 comprises at least one transferrable frame structure element 2a which is transferrable from a first orientation and/or position as shown in Fig. 2 to at least one second orientation and/or position as shown in Fig. 1 so as to change the size or volume of the inner space 3. As is apparent from Fig. 3, the frame structure comprises 2 a plurality of transferrable frame structure elements 2a provided at opposing sides of the frame structure 2, wherein each of the transferrable frame structure elements 2a is transferrable from a first orientation and/or position as shown in Fig. 2 to at least one second orientation and/or position as shown in Fig. 1 so as to change the size of the inner space 3.

Hence, the size or volume of the inner space 3 of the frame structure 2 can be modified, i.e. increased or decreased, by transferring the transferrable frame structure elements 2a from their respective first orientation and/or position to their respective second orientation and/or position. Particularly, by transferring the transferrable frame structure elements 2a from their respective first orientation and/or position to their respective second orientation and/or position, the size or volume of the inner space 3 of the frame structure 2 can typically be modified, i.e. increased or decreased, in at least one spatial direction.

As shown in the exemplary embodiments of Fig. 1, 2, the size of the inner space 3 can be modified in a horizontal axis/direction (as defined by the x-axis) of the frame structure 2. In same manner, also the outer dimensions of the frame structure 2 can be modified, i.e. increased or decreased, in a horizontal axis/direction (as defined by the x-axis) of the frame structure 2.

As is apparent from Fig. 1, 2. transferring the transferrable frame structure elements 2a from a respective first orientation and/or position to a respective second orientation and/or position typically, results in an increase of the size of the inner space. Particularly, by transferring the at least one transferrable frame structure element from its first orientation and/or position to its at least one second orientation and/or position, the size of the inner space 3 can be increased at least by 50% when the transferrable frame structure elements 2a are or have been transferred in their respective second orientation and/or position as shown in Fig. 1.

As such, it is generally possible to deliberately modify the spatial footprint of the frame structure 2, i.e. particularly the size of the base area of the frame structure 2, by transferring the transferrable frame structure elements 2a from a respective first orientation and/or position to a reps second orientation and/or position so as to adapt the configuration of the frame structure 2 to different purposes which can mainly depend on the loading state of the inner space 3. As will be apparent from below, transferring of the at least one frame structure element from a first orientation and/or position to at least one second orientation and/or position can particularly be effected manually, i.e. particularly without tools, which highly increases the practicability of the apparatus.

As such, in the operational configuration of the frame structure 2 as shown in Fig. 1, in which it is configured to receive particles to be transported from a first location to at least one further location, the configuration of the frame structure 2 has an increased inner space 3 which results from transferring the transferable frame structure elements 2a from a reps first orientation and/or position to a respective second orientation and/or position. The operational configuration can also be deemed a loading configuration since it particularly allows that the frame structure 2 can be loaded with particles. The or a respective operational configuration is typically, related with a state in which the frame structure 2 is fillable or filled with particles (filled state).

In a non-operational configuration of the frame structure 2 as shown in Fig. 2, 3, in which it is not configured to receive particles to be transported from a first location to at least one further location, the configuration of the frame structure 2 has a decreased inner space 3 which results from transferring the transferrable frame structure elements 2a from a respective second orientation and/or position to a respective first orientation and/or position. The non-operational configuration can also be deemed a non-loading configuration since it particularly does not allow that the frame structure 2 can be loaded with particles. The or a respective non-operational configuration is typically, related with a state in which the frame structure 2 is not filled with particles (unfilled state).

It is clear from the above explanation that the apparatus 1 does not have a fixed footprint and does not require a relatively large footprint when transported in an unloaded state, i.e. in a state in which it is not loaded with particles. This renders the transport of the apparatus 1 in an unloaded state highly effective. Particularly, handling of transport of the apparatus 1 in an unloaded state with a decreased footprint is more effective not only in terms of technical aspects, but also economic aspects and sustainable aspects.

The frame structure 2 also comprises a plurality of non-transferrable frame structure elements 2b, i.e. frame structure elements which are not transferrable from a first orientation and/or position to at least one second orientation and/or position so as to change the size of the inner space 3. Hence, the frame structure 2 can comprise at both transferrable frame structure elements 2a and non-transferrable frame structure elements 2b.

Respective transferrable frame structure elements 2a are typically, moveably supported in at least one degree of freedom of motion. A respective degree of freedom of motion can be a rotary degree of freedom of motion about a rotary axis. A respective rotary axis can be defined by a longitudinal axis of a frame structure element 2a, 2b or a parallel axis thereto. Alternatively or additionally, a respective degree of freedom of motion can be a translatory degree of freedom of motion along a translatory axis. A respective translatory axis can be defined by a longitudinal axis of a frame structure element. As such, the transferrable frame structure elements 2a can be transferrable from a respective first orientation and/or position to a respective second orientation by a translatory motion relative to at least one further frame structure element 2a, 2b.

As is particularly apparent from Fig. 3, a respective transferrable from structure element 2a can be connected with at least one further transferrable frame structure element 2a or a non-transferrable frame structure element 2a via at least one hinge-joint 4. Hence, the transferrable from structure elements 2a can be transferred from a respective first orientation and/or position to a respective second orientation and/or position by a pivot motion enabled by a respective hinge-joint 4. The axis of the respective degree of freedom of motion of the transferrable from structure elements 2a can thus, be a pivot axis defined by the respective hinge-joints 4.

According to the exemplary embodiments if Fig. 1 - 4, the frame structure 2 can comprise a plurality of transferrable frame structure elements 2a being connected via at least one respective hinge-joints 4. As is particularly apparent from Fig. 3, the frame structure 2 can comprise a first and a second transferrable frame structure element 2a and a first and a second non-transferrable frame structure element 2b, wherein the first transferrable frame structure element 2a comprises a first connecting interface for being connected with the first non-transferrable frame structure element 2b and a second connecting interface for being connected with a first connecting interface of the second transferrable frame structure element 2a. Likewise, the second transferrable frame structure element 2a comprises a first connecting interface for being connected with the second non-transferrable frame structure element 2b and a second connecting interface for being connected with the second connecting interface of the first transferrable frame structure element 2a. This arrangement of respective first and second transferrable frame structure elements 2a and respective first and second non-transferrable frame structure elements 2b is provided at two opposing sides of the frame structure 2.

Fig. 1, 2, and 4 shows that the apparatus 1 can comprise a plurality of motion elements 5, e.g. rollers, wheels, etc., for moving the frame structure 2 on a ground 6. By providing the apparatus 1 with respective motion elements, the frame structure 2 can be moveable on a ground 2 both in the loaded state and in the unloaded state. The apparatus 1 can thus, be denoted a mobile silo. Motion of the frame structure 2 can be effected manually, by an external driving device, such as a fork lift, robotic cart, etc. Also, the frame structure 2 can be provided with an integrated driving means, such as a motor, for instance.

As is further apparent from Fig. 1, 2 and 4, respective motion elements 5 are typically, provided with frame structure elements 2a, 2b defining a bottom of the frame structure 2. As an example, the apparatus 1 is provided with at least four motion elements 5 arranged at or in the region of the outer edges of the frame structure 2 such that the arrangement of the motion elements 5 also provides a certain degree of stabilization of the frame structure 2 against tilting relative to a horizontal or vertical axis.

As is further apparent from Fig. 1, 2 and 4, the apparatus 1 can further comprise stabilization elements 7 for stabilizing the frame structure 2 against tilting, particularly against tilting over a defined tilting angle, such as a tilting angle ranging between 5 and 45°, for instance, relative to a horizontal or vertical axis. The stabilization elements 7 are typically, also provided with at least one frame structure element 2a, 2b defining a bottom of the frame structure 2. More, particularly, the stabilization elements 2a, 2b can be provided adjacent to a respective motion element 5 provided with a frame structure element 2a, 2b. As such, each stabilization element 7 is particularly provided adjacent, i.e. in particularly in close proximity, to a respective motion element 5. As is apparent from Fig. 1, 2, respective stabilization elements 7 can have an outer position with respect to a free end of the frame structure 2 than respective motion elements 5.

The arrangement of respective stabilization elements 7 can comprise a base position above ground 6, i.e. a position in which the respective stabilization elements do not touch ground 6, as shown in Fig. 1 and 4. Yet, the stabilization elements can contact ground thereby, enabling a stabilizing effect, when the frame structure 2 begins to tilt relative to a horizontal or vertical axis, particularly when the frame structure 2 tilts and reaches a defined tilting angle relative to a horizontal or vertical axis such that further tilting of the frame structure 2 beyond the defined tilting angle is inhibited. Also, the arrangement of respective stabilization elements 7 can comprise a position on ground 6, i.e. a position in which the respective stabilization elements 7 do touch ground 6, as shown in Fig. 2, for providing the respective stabilization of the frame structure 2 against tilting.

Fig. 1, 2, and 4 further show that a respective stabilization element 7 can comprise a roller or wheel, for instance. However, the size, i.e. particularly the diameter, of the rollers or wheels forming a respective stabilization element 7 can be smaller than the size, i.e. particularly the diameter, of the other motion elements 5 which enable motion of the frame structure 2 relative to ground 6. In such a manner, the rollers or wheels forming respective stabilization elements 7 can be positioned in a respective base position as mentioned above.

The apparatus 1 can comprise a receiving element 8 provided with the inner space 3 and forming a receiving space 9 for receiving particles. Hence, the at receiving element 8 can be deemed as the actual element for directly receiving particles to be transported with the apparatus 1. The receiving element 8 can be provided with at least one attachment interface 8a which enables a stable attachment of the receiving element 8 with at least one frame structure element 2a, 2b. Likewise, at least one frame structure element can be provided with at least one counter-attachment interface (not explicitly shown) which enables a stable attachment of the receiving element 8 with at least one frame structure element 2a, 2b. Respective attachment and counter-attachment interfaces can particularly, enable a mechanical attachment of the receiving element 8 with at least one frame structure element 2a, 2b. Merely as an example, mechanical form-fit attachment elements, mechanical force-fit attachment elements, combined mechanical form- and force-fit elements, hook-and-loop-type attachment elements, etc. can be used for implementing respective interfaces. As such, a respective attachment of the receiving element 8 can be detachable such that the receiving element 8 can be easily replaced, e.g. in case of failure, contamination, etc.

The receiving element 8 is typically, flexible with respect to its dimensions and related receiving space 9. As such, the receiving element 8 can be reversibly deformed, e.g. by folding, when the size of the inner space 3 of the frame structure 2 is increased or decreased by transferring the respective transferrable frame structure elements 2a from a respective first orientation and/or position to a respective second orientation and/or position as described above. As such, the receiving element 8 can be provided with at least one deforming structure, e.g. folding lines, seams, etc. facilitating deforming the at receiving element 8 when the transferrable frame structure elements 2a are transferred between respective first and second orientations and/or positions.

The receiving element 8 can be made of a flexible mesh- or textile-structure or can comprise such a structure. The mesh- or textile-structure is typically, chosen such that undesired chemical and/or physical interactions with particles to be received in the receiving space 9 are avoided. The mesh- or textile-structure can be used several times and can thus, be re-used. Also, the mesh- or textile-structure can be cleanable which allows using it with different materials without the danger of material contamination.

Respective undesired physical interactions can comprise electrical interactions between the mesh- or textile-structure and particles to be received in the receiving space 9 which might result in an electrostatic charging of the mesh- or textile-structure and/or the particles to be received in the receiving space 9. As such, the receiving element 8 can be provided with one or more discharging elements (not explicitly shown) enabling an electrostatic discharge. Respective discharging elements can be provided by electrically conductive structures, such as metal structures, provided with the receiving element 8. Respective electrically conductive structures can be built by electrically conductive filaments which are integrated in the mesh- or textile-structure forming the receiving element 8, for instance. Respective electrically conductive structures can be electrically connected with the frame structure 2 e.g. so as to provide an electrical discharge to ground 6. The frame structure 2 can be grounded with electrically conductive frame structure elements 2a, 2b which are connected to ground 6 and/or with separate grounding devices (not shown), which may be built as or comprise so-called crocodile clamps, for instance and which enable a connection of electrically conductive frame structure elements 2a, 2b to ground 6.

Referring back to Fig. 1, the apparatus 1 can comprise a locking device 10 for locking at least one transferrable frame structure element 2a in the first and/or second orientation and/or position. The locking device 10 can lock a specific configuration of the frame structure 2 which increases both handling and safety of the apparatus 1. The locking device 10 can comprise at least one locking element 10a which is moveable between a locking position in which it locks at least one transferrable frame structure element 2a against motion, thus prohibiting a respective transferal of the frame structure element 2a, and an unlocking position in which it does not lock the at least one transferrable frame structure element 2a against motion thus, enabling a respective transferal of the frame structure element 2a.

Fig. 1, 2 also shown another possible embodiment of a locking device 10 which comprises a locking element 10a, e.g. in the shape of a lever, for locking the at least one transferrable frame structure element 2b in the second orientation and/or position. The locking element 10a is moveably, i.e. particularly pivotably around a pivot axis as indicated by the double-arrow in Fig. 1, supported at a first non-transferrable frame structure element 2b and can engage in its locking position with an engagement portion (not explicitly shown), e.g. a projection, recess, etc. of at least one other non-transferrable frame structure element 2b so as to lock the transferrable frame structure elements 2a against motion. Also, an inverse configuration is conceivable.

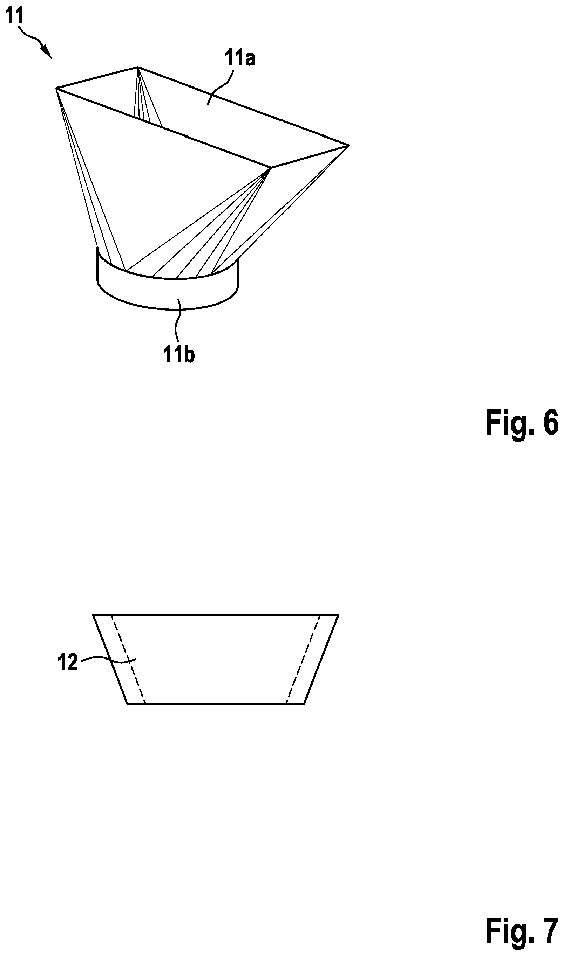

Fig. 4 - 6 show that the apparatus 1 can comprise a connection interface 11 (see also Fig. 6) provided with at least one side, particularly a bottom wall, of the frame structure 2. The connection interface 11 allows for introducing particles in the frame structure 2 or for removing particles from the frame structure 2, e.g. via a hose, pipe, tube, etc. Particularly, the connection interface 11 can comprise a base portion 11a and a flange portion 11b configured to being connected with a hose, pipe, tube, etc. The base portion 11a can be a conical portion. The connection interface 11 can be provided by or in an opening in a bottom wall of the frame structure 2 as shown in Fig. 4. As such, the connection interface provides 11 an entrance and/or an exit for particles to be introduced into the frame structure 3, i.e. particularly into a respective unfilled or unloaded receiving element 8 provided within the frame structure 2, or for particles to be removed from the frame structure 2, i.e. particularly from a respective filled or loaded receiving element 8 provided with the frame structure 2. As such, the connection interface 11 communicates with an entrance or exit opening 8a provided with the receiving element 8.

To enable a stable connection between the connection interface 11 and the receiving element 8, which can comprise a special tube-like portion (not explicitly shown) at least partially extending into the connection interface 11, the apparatus 1 can comprise an adapter element 12 (see also Fig. 7) which provides a stable connection between the connection interface 11 and the receiving element 8. The adapter element 12 can particularly, be configured to provide a holding force, e.g. a clamping force, between the connection interface 11 and the receiving element 8. The holding or clamping force thus, particularly serves for holding or clamping, respectively the receiving element 8, i.e. particularly a respective tube-like portion, against a wall portion delimiting an inner space of the connection interface 11. This can be achieved by inserting the adapter element 12 into the connection interface after placing a respective tube-like portion of the at least one receiving element into the connection interface. The adapter element 12 can further be mechanically connected to the frame structure 2, e.g. by a screw connection.

As is apparent from Fig. 7, also the adapter element 12 can comprise a conical base-shape. The conical base-shape enables improved clamping of the receiving element 8, i.e. particularly a respective tube-like portion, against a wall portion of the bottom wall of the frame structure 2 delimiting an inner space of the connection interface 11.

Both the connection interface 11 or the adapter element 12 can be provided with a valve device (not shown) for avoiding undesired particle leakage from the frame structure 2 or receiving element 8, respectively. The valve device can comprise at least one valve element which is moveable between a closed position in which it closes the connection interface 11 or adapter element 12, respectively, thus prohibiting particle leakage, and an open position in which it does not close the connection interface 11 or adapter element 12 thus, enabling particle leakage.

The apparatus 1 can be used for implementing a method for transporting particles, particularly polymer particles, more particularly foamed polymer particles. The method particularly, comprises transferring at least one transferrable frame structure element 2a from a respective first orientation and/or position to a respective second orientation and/or position; and/or introducing or removing particles from the inner space 3 of the frame structure 2.

## Claims

1. An apparatus for transporting particles, such as polymer particles, particularly foamed polymer particles, the apparatus comprising a frame structure comprising a plurality of, particularly bar- or strut-shaped, frame structure elements defining an inner space, wherein the frame structure comprises at least one transferrable frame structure element which is transferrable from a first orientation and/or position to at least one second orientation and/or position so as to change the size of the inner space.

2. The apparatus of claim 1, wherein the at least one transferrable frame structure element is transferrable from a first orientation and/or position to at least one second orientation by a translatory motion relative to at least one further frame structure element.

3. The apparatus of claim 1 or 2, wherein the at least one transferrable frame structure element is transferrable from a first orientation and/or position to at least one second orientation by a rotary motion relative to at least one further frame structure element.

4. The apparatus of any of the preceding claims, wherein the at least one transferrable from structure element is connected with at least one further transferrable or non-transferrable frame structure element via at least one hinge-joint.

5. The apparatus of any of the preceding claims, wherein the frame structure comprises a plurality of transferrable frame structure elements being transferrable from a first orientation and/or position to at least one second orientation and/or position.

6. The apparatus of claim 5, wherein the frame structure at least comprises respective first and second transferrable frame structure elements and first and non-transferrable frame structure elements, wherein
the first transferrable frame structure element comprises a first connecting interface for being connected with the first non-transferrable frame structure element and a second connecting interface for being connected with a first connecting interface of the second transferrable frame structure element, and the second transferrable frame structure element comprises first connecting interface for being connected with the second non-transferrable frame structure element and a second connecting interface for being connected with the second connecting interface of the first transferrable frame structure element.

7. The apparatus of any of the preceding claims, further comprising a plurality of motion elements, e.g. rollers, wheels, etc., for moving the frame structure on a ground.

8. The apparatus of any of the preceding claims, further comprising at least one stabilization element for stabilizing the frame structure against tilting, particularly against tilting over a defined tilting angle relative to a horizontal or vertical axis.

9. The apparatus of claim 8, wherein the at least one stabilization element comprises a roller or wheel.

10. The apparatus of any of the preceding claims, further comprising at least one flexible receiving element provided with the inner space of the frame structure and forming a receiving space for receiving particles.

11. The apparatus of claim 10, wherein the at least one receiving element is provided with at least one discharging element enabling an electrostatic discharge of the at least one receiving element.

12. The apparatus of any of the preceding claims, further comprising a locking device for locking the at least one transferrable frame structure element in the first and/or second orientation and/or position.

13. The apparatus of any of the preceding claims, wherein the dimensions of the frame structure are standardized with respect to standardized measurements of a load space of a vehicle, particularly a truck, or a load space of a vehicle trailer.

14. The apparatus of any of the preceding claims, further comprising a connection interface provided with at least one side, particularly a bottom portion, of the frame structure, the connection interface allowing for introducing particles in the frame structure or for removing particles from the frame structure.

15. A method for transporting particles, particularly polymer particles, more particularly foamed polymer particles, using an apparatus according to any of the preceding claims, the method comprising:
- transferring at least one transferrable frame structure element from a respective first orientation and/or position to a respective second orientation and/or position; and/or
- introducing or removing particles from the inner space of the frame structure.
